# EUROPEAN PATENT APPLICATION

(11) **EP 2 853 331 A2**
(43) Date of publication of application: **01.04.2015**
(21) Application number: 14185886.0
(22) Date of filing: 23.09.2014
(51) Int. Cl.: B23F 23/00, B23F 23/10, B23F 5/16

(54) **Gear manufacturing device and method for manufacturing gear**

(30) Priority: 24.09.2013 JP 2013197181
(71) Applicant: AISIN SEIKI KABUSHIKI KAISHA, Kariya-shi, Aichi 448-8650 (JP)
(72) Inventor: Kurita, Nobuaki, Kariya-shi,, Aichi 448-8650 (JP); Nakahara, Yoshitomo, Kariya-shi,, Aichi 448-8650 (JP)
(74) Representative: TBK

(57) **Abstract**

A gear manufacturing device includes a control unit (D) for synchronously rotating a work (1) rotating about a work axis (T) and a cutter (10) rotating about a cutter axis (S), the work axis (T) and the cutter axis (S) being skew to each other, the control unit (D) relatively moving the cutter (10) and the work (1) in an axial direction of the work (1) with a predetermined cutting depth, and a correction control portion (36) executing at least one of a position correction and a phase correction when an amplitude value of a vibration detected by a vibration sensor (15) during a machining reaches equal to or greater than a set value, the position correction for correcting a relative positional relationship in a direction to correct the cutting depth, the phase correction for correcting a relative phase in a direction to correct an unbalance cutting that is otherwise to be applied on a pair of tooth surfaces formed on the work (1).

## Description

### TECHNICAL FIELD

This disclosure generally relates to a gear manufacturing device and a method for manufacturing a gear.

### BACKGROUND DISCUSSION

JP2012-45687A (hereinafter referred to as Patent reference 1) discloses a gear cutting machining performed by feeding a skiving cutter (pinion cutter according to Patent reference 1), which synchronously rotates with a ring-shaped work, in a direction of a tooth trace of a tooth that is produced on the work while rotating the work.

As disclosed in Patent reference 1, machining is performed efficiently or fast by synchronously rotating the work and the skiving cutter.

Skiving is disclosed in the following reference: KOJIMA Masakazu, and NISHIJIMA Komio. "Study in Skiving of Internal Spur Gear: Part 1, On Cutter Profile" Transactions of the Japan Society of Mechanical Engineers (edition C) 39(324), 2580-2586, (hereinafter referred to as non-patent reference 1). As disclosed in non-patent reference 1, the skiving is a type of machining in which cutting is achieved using "sliding, or sliding action."

As disclosed in non-patent reference 1, according to the skiving, the cutting is performed using the "sliding, or sliding action" in which a blade portion of a pinion cutter relatively moves in a direction of a tooth trace of a tooth produced on a work by synchronously rotating the work and the pinion cutter in a manner that the blade portion of the pinion cutter meshes with the tooth at a tooth space to be formed on the work by cutting, which enables a fast speed, or efficient machining.

Notwithstanding, according to the skiving, vibrations may occur at (in) the end of the cutting by the cutter. In a case where the vibration is generated, because a positional relationship between the cutter and the work is displaced, or shifted, a tooth surface of the work is excessively cut and a width of the tooth space of the machining region where the vibration is generated is expanded.

According to the skiving, a rotation axis of the work and a rotation axis of the cutter are positioned skew. Thus, among cutting edges of plural blade portions that structure the pinion cutter for the skiving, provided that a preceding side (downstream side of rotation) is defined as a leading side and a following side (upstream side of rotation) is defined as a trailing side, the leading side of the blade portion is disengaged (released) from the work first, and the trailing side is disengaged (released) from the work later at the completion of the cutting.

According to the cutting described above, the vibration is unlikely generated due to stable load applied to the pinion cutter because the load is equally applied to the leading side and the trailing side of a cutting edge in a state where the cutting continues after starting the cutting. However, the vibration may be generated at a timing when the leading side of the blade portion is disengaged (released) from the work at a terminal end of the cut region, or a portion close to a terminal end of the cut region.

Further, the cutter is support at (by) one side (cantilever structure) relative to an axial end of a drive shaft, which is readily vibrated, thus the vibration may readily occur. In order to solve this drawback, a diameter of the drive shaft of the pinion cutter may be increased. However, it is difficult to increase the diameter of the drive shaft of the pinion cutter in terms of avoiding the interference with other jigs, thus there remains room for improvement.

A need thus exists for a gear manufacturing device and a method for manufacturing a gear which enhances a machining precision by restraining the vibration during manufacturing a gear by skiving.

### SUMMARY

According to the construction of the disclosure, a gear manufacturing device includes a control unit for synchronously rotating a work rotatably supported about a work axis and a cutter formed in a gear shape and rotatably supported about a cutter axis, the work axis and the cutter axis being skew to each other, the control unit relatively moving the cutter and the work in an axial direction of the work with a predetermined cutting depth. The gear manufacturing device further includes a vibration sensor detecting a vibration of the work and the cutter, and a correction control portion executing at least one of a position correction and a phase correction when an amplitude value of a vibration detected by the vibration sensor during a machining reaches equal to or greater than a set value, the position correction for correcting a relative positional relationship of the cutter and the work in a direction to correct the cutting depth, the phase correction for correcting a relative phase of the cutter and the work in a direction to correct an unbalance cutting that is otherwise to be applied on a pair of tooth surfaces that structure a tooth portion formed on the work.

According to the construction of the disclosure, the correction control portion executes at least one of the position correction for correcting the relative positional relationship of the cutter and the work in a direction to reduce the cutting depth and the phase correction for correcting the relative phase of the cutter and the work in a direction to correct an unbalance cutting that is otherwise to be applied on the tooth surfaces serving as a pair that structure the tooth portion formed on the work in a case where the vibration sensor detects a vibration with an amplitude equal to or greater than the set value (predetermined value) during the cutting of the work by the cutter.

In a case where the relative positional relationship of the cutter and the work is corrected in the direction to reduce the cutting depth by the position correction, the excessive cutting in response to the vibration is restrained simultaneously with restraining the vibration by reducing the load applied to the cutter. By reducing the cutting depth (shallower cutting depth), the tooth space formed on the work becomes shallower (is reduced), however, the capacity or performance of the gear does not decline because the bottomland portion does not work for, or is not involved with the gear engagement.

Further, in a case where the relative phase of the cutter and the work corrected in a direction to correct the unbalance cutting that is otherwise to be applied on the tooth surfaces serving as a pair that structure the tooth portion formed on the work by the phase correction, the excessive cutting at one of the tooth surfaces can be restrained. It is considered that a firm contact of the work and the cutter causes the unbalance cutting of the tooth surfaces of the tooth portion serving as a pair. By the phase correction, the firm contact of the work and the cutter can be canceled to restrain the vibration from occurring.

Thus, by executing at least one of the position correction and the phase correction when the amplitude value of the vibration detected by the vibration sensor reaches equal to or greater than the set value (predetermined value), the vibration is restrained to enhance the machining precision when manufacturing a gear by skiving, and thus a gear manufacturing device for manufacturing a gear with high precision can be attained.

According to the disclosure, the correction control portion obtains the amplitude value of the vibration from a detection signal of the vibration sensor, and sets a correction amount of the position correction and the phase correction on the basis of an arithmetic operation based on the amplitude value.

According to the construction of the disclosure, when the amplitude value of the vibration detected by the vibration sensor reaches equal to or greater than the set value (predetermined value), the correction control portion obtains the correction amount by the arithmetic operation on the basis of the amplitude value, and at least one of the position correction and the phase correction is executed. By this correction, the amplitude value of the vibration detected by the vibration sensor can be reflected on the correction amount of the correction, which allows an appropriate correction.

According to the disclosure, the correction control portion includes a correction amount reference table which stores a correction amount related to the amplitude value detected by the vibration sensor and a correction amount read out portion reading out the correction amount of said at least one of the position correction and the phase correction from the correction amount reference table on the basis of the amplitude value from the detection signal of the vibration sensor.

According to the construction of the disclosure, when the amplitude value of the vibration detected by the vibration sensor reaches equal to or greater than the set value (predetermined value), on the basis of the amplitude value, the correction amount read out portion reads out the correction value from the correction amount reference table, and at least one of the position correction and the phase correction is executed. By this correction, because the amplitude value of the vibration detected by the vibration sensor is reflected on the correction amount of the correction and the arithmetic operation is not necessary, the time required for the arithmetic operation is omitted, and thus swift correction in accordance with the amplitude value can be performed.

According to the disclosure, the gear manufacturing device further includes an alert control portion alerting an abnormality in a case where the amplitude value detected by the vibration sensor reaches equal to or greater than a predetermined limitation value.

In a case where the cutter is damaged or where the cutting capacity of the cutter is significantly declined, a vibration with large amplitude is caused during the machining, or skiving. Using this phenomenon, or feature, by setting the amplitude value when the cutter is damaged or when the cutting capacity of the cutter is significantly declined as the limitation value, an alerting is performed by the alert control portion when an incapable state where an appropriate machining, or skiving cannot be performed is caused. Thus, the device alerts an operator to some abnormal situation, and urges the operator to appropriately respond.

According to the disclosure, the gear manufacturing device further includes an alert control portion performing a replacing alert urging to replace the cutter in a case where the amplitude detected by the vibration sensor reaches equal to or greater than a predetermined reference value.

When the cutting capacity of the cutter is declined, the vibration caused during the machining, or skiving increases compared to the case where the cutter with appropriate cutting capacity is applied. Using this phenomenon, or feature, by setting the amplitude value when the cutting capacity of the cutter is declined as the reference value, alerting by the alert control portion is performed when the cutting capacity of the cutter is declined. Thus, the device alerts an operator to the situation where the replacing of the cutter is necessary, and urges the operator to appropriately respond.

According to the disclosure, a method for manufacturing a gear includes synchronously rotating a work rotatably supported about a work axis and a cutter rotatably supported about a cutter axis, the work axis and the cutter axis being skew to each other, skiving the work by relatively moving the cutter and the work in an axial direction of the work with a predetermined cutting depth, and performing at least one of a position correction and a phase correction when an amplitude value of a vibration detected by a vibration sensor to which the vibration of the work or the cutter is transmitted during the skiving reaches equal to or greater than a set value, the position correction for correcting a relative positional relationship of the cutter and the work in a direction to correct the cutting depth, the phase correction for correcting a relative phase of the cutter and the work in a direction to correct an unbalance cutting that is otherwise to be applied on a pair of tooth surfaces that construct a tooth portion formed on the work.

According to the construction of the disclosure, when the vibration of the amplitude equal to or greater than the set value (predetermined value) is detected by the vibration sensor during the cutting of the work by the cutter, at least one of the position correction for correcting the relative positional relationship of the cutter and the work in a direction to reduce the cutting depth (shallower cutting depth) and the phase correction for correcting the relative phase of the cutter and the work in a direction to correct the unbalance cutting that is otherwise to be applied on the tooth surfaces (serving as a pair) of the tooth portion formed on the work is performed.

In a case where the relative positional relationship of the cutter and the work is corrected in a direction to reduce the cutting depth by the position correction, the excessive cutting in response to the vibration is restrained simultaneously with retraining the vibration by reducing the load applied to the cutter.

Further, in a case where the relative phase of the work and the cutter is corrected in a direction to correct the unbalance cutting that is otherwise to be applied on the tooth surfaces (serving as a pair) that structure the tooth portion formed on the work by the phase correction, the excessive cutting of one of the tooth surfaces can be restrained. It is considered that a firm contact of the work and the cutter causes the unbalance cutting of the tooth surfaces of the tooth portion serving as a pair. By cancelling the firm contact of the work and the cutter by the correction, the vibration can be restrained from occurring.

Thus, when the amplitude value of the vibration detected by the vibration sensor reaches equal to or greater than the set value (predetermined value), by performing at least one of the position correction and the phase correction (by performing one of or both of two types of corrections), the machining precision is enhanced by restraining the vibration when manufacturing a gear by the skiving, and a method for manufacturing a gear with high precision can be attained.

According to the disclosure, the method for manufacturing the gear further includes storing a maximum amplitude value of the vibration detected by the vibration sensor when the work is processed with the cutting by the cutter and a cutting error value for a maximum cutting amount of each of the pair of tooth surfaces of the tooth portion formed on the work by the skiving when the vibration occurs, obtaining at least an amplitude ratio on the basis of the amplitude value that the vibration sensor detects and the maximum amplitude value, obtaining a correction amount by a correction amount computing portion on the basis of the amplitude ratio and the cutting error value, and executing at least one of the position correction and the phase correction on the basis of the correction amount.

According to the construction of the disclosure, in a case where the amplitude value of the vibration detected by the vibration sensor reaches equal to or greater than the set value (predetermined value), the correction amount computing portion obtains the correction amount on the basis of the maximum amplitude value and the cutting error value stored in a memory in advance and the amplitude value, and at least one of the position correction and the phase correction is performed. In the correction, the amplitude value of the vibration detected by the vibration sensor is reflected on the correction amount of the correction, and thus the correction is appropriately performed.

According to the disclosure, the method for manufacturing the gear further includes obtaining the maximum amplitude value of a vibration detected by the vibration sensor when the work is processed with the cutting by the cutter, obtaining the cutting error value for a maximum cutting amount of each of the pair of tooth surfaces of the tooth portion formed on the work by skiving when the vibration occurs, obtaining the plural amplitude ratios on the basis of the maximum amplitude value and a predicted amplitude value that is predicted to be detected by the vibration sensor, storing a correction amount related to the amplitude value detected by the vibration sensor in a correction amount reference table on the basis of the plural amplitude ratios and the cutting error value, reading out the correction amount from the correction amount reference table by a correction amount read out portion on the basis of the amplitude value detected by the vibration sensor, and executing at least one of the position correction and the phase correction on the basis of the correction amount.

According to the construction of the disclosure, when the amplitude value of the vibration detected by the vibration sensor reaches equal to or greater than the set value (predetermined value), the correction amount read out portion reads out the correction value from the correction amount reference table on the basis of the amplitude value, and at least one of the position correction and the phase correction is performed. According to the correction, because the amplitude value of the vibration detected by the vibration sensor is reflected on the correction amount of the correction, and the arithmetic operation is not necessary, the time required for the arithmetic operation is omitted and the swift correction in accordance with the amplitude value can be performed.

According to the disclosure, the method for manufacturing the gear, alerting an abnormality when the amplitude value detected by the vibration sensor reaches equal to or greater than a predetermined limitation value.

In a case where the cutter is damaged or where the cutting capacity of the cutter is significantly declined, a vibration with large amplitude is caused during the machining, or skiving. Using this phenomenon, or feature, by setting the amplitude value when the cutter is damaged or when the cutting capacity of the cutter is significantly declined as the limitation value, an alerting is performed when an incapable state where an appropriate machining, or skiving cannot be performed is caused. Thus, the device alerts an operator to some abnormal situation, and urges the operator to appropriately respond.

According to the disclosure, the method for manufacturing the gear, performing a replacing alert urging to replace the cutter when the amplitude value detected by the vibration sensor reaches equal to or greater than a predetermined reference value.

When the cutting capacity of the cutter is declined, the vibration caused during the machining, or skiving increases compared to the case where the cutter with appropriate cutting capacity is applied. Using this phenomenon, or feature, by setting the amplitude value when the cutting capacity of the cutter is declined as the reference value, alerting is performed when the cutting capacity of the cutter is declined. Thus, the device alerts an operator to the situation where the replacing of the cutter is necessary, and urges the operator to appropriately respond.

According to a further aspect of this disclosure, a method for manufacturing a gear includes synchronously rotating a work rotatably supported about a work axis and a cutter rotatably supported about a cutter axis, the work axis and the cutter axis being skew to each other, skiving the work by relatively moving the cutter and the work in an axial direction of the work with a predetermined cutting depth, and executing at least one of a position correction and a phase correction when the cutter reaches a predetermined terminal end region in a cut region, the position correction for correcting a relative positional relationship of the cutter and the work in a direction to correct a cutting depth, the phase correction for correcting a phase of the cutter and the work in a direction to correct unbalance cutting of a pair of tooth surfaces that structure a tooth portion formed on the work.

According to the construction of the disclosure, in a case where the cutter reaches the predetermined terminal end region during the skiving, at least one of the correction for correcting the relative positional relationship of the cutter and the work in a direction to reduce the cutting depth and the correction for correcting the phase of the cutter and the work in a direction to correct the unbalance cutting that is otherwise to be applied on the tooth surfaces of the tooth portion (serving as a pair) formed on the work is executed.

As described above, the vibration is likely generated at the terminal end region of the cutting and the terminal end region can be identified in advance (pre-estimated). Thus, when the cutter reaches the terminal end region, the load applied to the cutter is reduced by the correction, thus the vibration can be restrained from occurring and the excessive cutting can be restrained.

Thus, in a case where the cutter reaches the terminal end region of the cut region, by executing at least one of the position correction and the phase correction, the machining precision is enhanced by restraining the vibration when manufacturing the gear by skiving and the gear manufacturing device for manufacturing a gear with high precision can be attained without using the vibration sensor (even if the vibration sensor is not applied).

According to the disclosure, the method for manufacturing the gear, storing a correction amount related to a relative position of the work and the cutter being positioned at the terminal end region in a correction amount setting table, and executing the correction based on the correction amount read out from the correction amount setting table on the basis of the relative position at the terminal end region.

According to the construction of the disclosure, in the terminal end region, the amplitude value of the vibration is different in accordance with (depending on) the relative position of the work and the cutter, and thus the correction amount related to the amplitude value is assumed to be different in accordance with (depending on) the relative position of the work and the cutter. Accordingly, by storing the correction amount for the relative position of the work and the cutter in the terminal end region in the correction amount setting table, the correction can be performed by setting appropriate correction amount when performing the cutting in the terminal end region.

### BRIEF DESCRIPTION OF THE DRAWINGS

The foregoing and additional features and characteristics of this disclosure will become more apparent from the following detailed description considered with the reference to the accompanying drawings, wherein:
Fig. 1 shows a structure of a skiving device according to an embodiment disclosed here;
Fig. 2 is a cross-sectional view showing a positional relationship of a work and a cutter;
Fig. 3 schematically shows cutting (machining) by a cutter;
Fig. 4 is a flowchart for a gear machining control according to the embodiment disclosed here;
Fig. 5 is a flowchart for a correction operation routine according to the embodiment disclosed here;
Fig. 6 shows a maximum amplitude of a vibration during the cutting (machining);
Fig. 7 shows cutting errors in a case where the vibration is generated during the cutting (machining);
Fig. 8 shows a structure of a skiving device according to a first modified example of the embodiment disclosed here;
Fig. 9 is a flowchart for a correction operation routine according to the first modified example of the embodiment;
Fig. 10 shows a structure of a skiving device according to a second modified example disclosed here; and
Fig. 11 is a flowchart for a correction operation routine according to the second modified example.

### DETAILED DESCRIPTION

Embodiments of the skiving device will be explained with reference to drawing figures as follows.

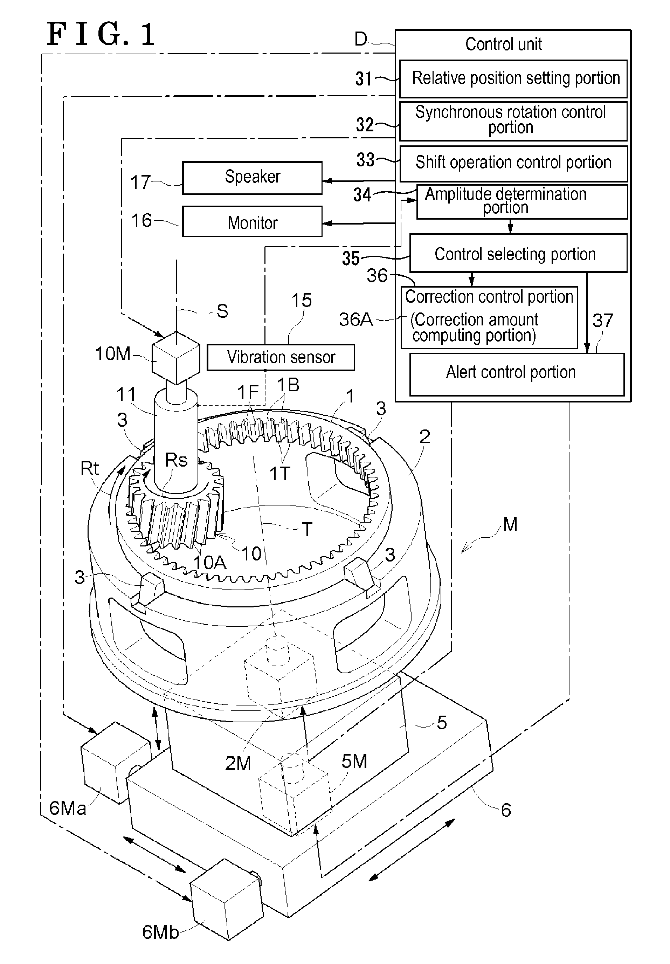

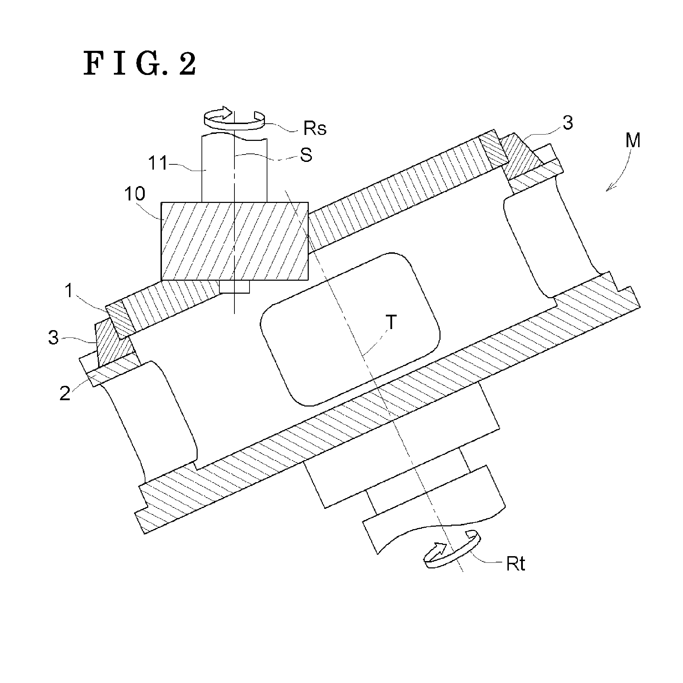

A skiving device of the embodiment serving as a gear manufacturing device of the disclosure is disclosed in Figs. 1 to 3. The skiving device provides a method for manufacturing a gear of the disclosure. The skiving device includes a table 2 rotatably supporting a ring-shaped work 1 about a work axis T, and a cutter (pinion cutter) 10 rotatably supported by a shaft holder 11 about a cutter axis S.

According to the skiving device, the work axis T and the cutter axis S are positioned on skew axes (the work axis T and the cutter axis S are positioned on axes which are skew to each other). Further, the table 2 is supported by a cutting operation mechanism M, and the table 2 includes a control unit D that controls the operation of the cutting operation mechanism M, the rotation of the work 1, and the rotation of the cutter 10.

The table 2 includes plural chucks 3 that fix the work 1 which is an object for machining. The table 2 is rotatably supported about the work axis T relative to a shift frame 5, and is actuated to rotate by a table motor 2M.

The cutter 10 is structured in a helical gear shape that includes plural blade portions 10A and is actuated to rotate by a cutter motor 10M. Further, a synchronous motor, for example, a stepping motor, is adopted for each of the table motor 2M and the cutter motor 10M.

The cutting operation mechanism M includes the shift frame 5, a slide frame 6, a shift motor 5M, a first slide motor 6Ma, and a second slide motor 6Mb. The shift frame 5 is supported to be movable relative to the slide frame 6 along the work axis T. The slide frame 6 is supported by a frame of the skiving device so that the slide frame 6 is movable in two directions on an imaginary plane which is orthogonal to the work axis T.

The shift motor 5M reciprocates the shift frame 5 in directions along the work axis T. The first slide motor 6Ma and the second slide motor 6Mb independently move the slide frame 6 to be reciprocated in directions being orthogonal to each other on the imaginary plane which is orthogonal to the work axis T.

As described above, because the work axis T and the cutter axis S are on axes which are skew to each other. In those circumstances, the work axis T is positioned in parallel with a direction of a tooth trace of the gear formed, or to be formed on the work 1 (i.e., the direction in parallel with the work axis T). A direction of a tooth trace of a blade portion 10A of the cutter 10 is in parallel with the direction of the tooth trace of the gear formed, or to be formed on the work 1. Because of the arrangements described above, by the actuation of the shift motor 5M, the work 1 can be relatively moved in the direction of the work axis T relative to the blade portion 10A of the cutter 10. Further, because of the independent actuations of the first slide motor 6Ma and the second slide motor 6Mb, a relative position of the work 1 relative to the cutter 10 in a direction orthogonal to the work axis T can be determined desirably. By setting the relative position of the work 1 relative to the cutter 10, a setting of a depth of the cutting by the blade portion 10A of the cutter 10 and the operation to separate the work 1 from the blade portion 10A of the cutter 10 can be performed.

According to the cutting operation mechanism M, a shift operation by the shift motor 5M and a setting operation by the first slide motor 6Ma and the second slide motor 6Mb are performed by a feed screw, however, the construction is not limited. According to an alternative construction, the shift operation and the setting operation may be performed by a rack and pinion gears. Further, alternatively, using a timing belt, the operation of the timing belt may be directly transmitted to perform the shift operation and the setting operation.

Further, the cutting operation mechanism M is not limited to the structure described above. For example, the cutting operation mechanism M may include plural arms similar to a multiarticular robot arm. Further, alternatively, the cutter 10 may be supported by, for example, a multiarticular robot arm so that the cutter 10 is moved relative to the work 1 in a direction of the work axis T of the work 1 while rotating the table 2 at a fixed position in the skiving device.

According to an alternative construction, the skiving device may include a relative angle setting portion for determining the skew positions (attitude) of the work axis T and the cutter axis S. The relative angle setting portion may be either manually operated or driven by an electric motor.

According to the skiving device, the control unit D sets, or determines a cutting depth by the cutter 10, synchronously drives the cutter motor 10M and the table motor 2M with a predetermined ratio of angular velocity at the position set, or determined by the control unit D, and controls the work 1 to shift, thus performing the cutting.

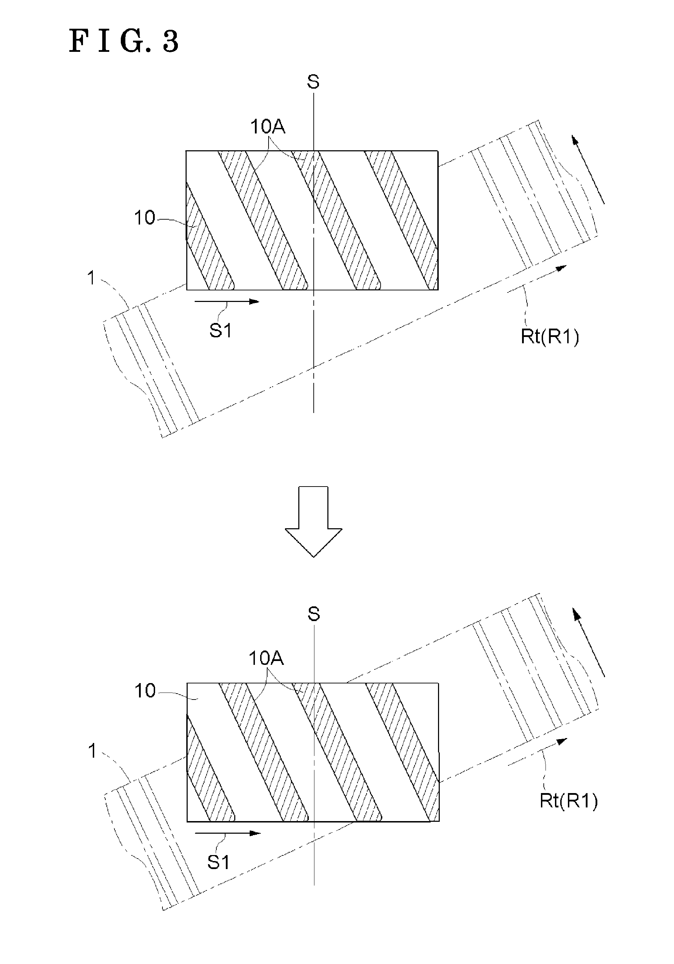

More particularly, by rotating the work 1 in a primary rotation direction Rt and rotating the cutter 10 in an auxiliary rotation direction Rs, the work 1 and the cutter 10 are synchronously rotated in the same speed at contact portions of the work 1 and the cutter 10. The velocity vector of the blade portion 10A of the cutter 10 (i.e., the direction in S1 in Fig. 3) and the velocity vector of the work 1 (i.e., the direction in R1 in Fig. 3) differ from each other in a state where the work 1 and the cutter 10 are synchronously rotated. "Sliding speed" is generated between the work 1 and the cutter 10 in a direction of the tooth trace by a difference of the velocity vectors. According to the skiving device, an entire region in a direction of the tooth trace of the work 1 is cut by moving the work 1 in a direction along the work axis T while cutting the work 1 using the "sliding speed."

By the cutting (machining), an internal spur gear is formed on an inner circumference of the work 1. According to an alternative construction, an internal helical gear may be formed on the inner circumference of the work 1. In case of machining a helical gear, while synchronously rotating the cutter 10 and the work 1, the cutter 10 is moved in a direction along an axis of the work 1 while providing a differential motion in which a relative phase of the cutter 10 and the work 1 is gradually shifted, or moved.

According to the skiving device of the embodiment, a vibration sensor 15 is disposed in the shaft holder 11 that rotatably supports a shaft of the cutter 10. The control unit D performs one of a position correction operation and a phase correction operation. The position correction operation is an operation for correcting a relative position of the cutter 10 relative to the work 1 in a direction for correcting the cutting depth in a case where an amplitude value of a vibration detected by the vibration sensor 15 reaches equal to or greater than a set value (predetermined value). The phase correction operation is an operation for correcting a relative phase of the cutter 10 and the work 1 in a direction for reducing an excessive cutting of one of a pair of tooth surfaces of the gear (in a direction to correct an unbalance cutting that is otherwise to be applied on a pair of tooth surfaces that structure a tooth portion formed on the work 1) in a case where an amplitude value of a vibration detected by the vibration sensor 15 reaches equal to or greater than a set value (predetermined value). In other words, in a case where the amplitude of the vibration in a radial direction of the cutter 10 or the work 1 is detected to be equal to or greater than the set value, the position correction operation is performed, whereas the phase correction operation is performed in a case where the amplitude of the vibration in a circumferential direction of the cutter 10 or the work 1 is detected to be equal to or greater than the set value. In those circumstances, the direction for correcting the cutting depth basically corresponds to a direction for reducing the cutting depth. However, in a case where the vibration has a center of amplitude that does not allow the cutter 10 to cut the work 1 by a predetermined cutting depth and causes the reduction of the cutting depth, the direction for correcting the cutting depth corresponds to a direction for increasing the cutting depth. According to the embodiment, a circular cutter is applied as the cutter 10, however, the configuration is not limited. For example, an elliptical (oval) cutter may be applied as the cutter 10.

The vibration sensor 15 may be disposed in the shift frame 5 supporting the work 1. Alternatively, the vibration sensor 15 may be disposed in the shift frame 5 and the shaft holder 11. In a case where plural vibration sensors 15 are provided, according to an alternative construction, an average value of detection signals of the vibration sensors 15 may be applied, or weightings may be applied to plural detection signals.

Constructions of the control unit D may be explained hereinafter. The control unit D includes a microprocessor and a digital signal processor (DSP), which is provided with software for performing the skiving (machining). The software includes a relative position setting portion 31, a synchronous rotation control portion 32, a shift operation control portion 33, an amplitude determination portion 34, a control selecting portion 35, a correction control portion 36, and an alert control portion 37. The control unit D is configured to output the information to a monitor 16 (e.g., liquid crystal screen) and a speaker 17.

The control unit D includes an output interface that outputs control signals to drive circuits for the table motor 2M, the cutter motor 10M, the shift motor 5M, the first slide motor 6Ma, and the second slide motor 6Mb, and that outputs control signals to the monitor 16 and the speaker 17. Further, the control unit D includes an input interface for importing the detection signal of the vibration sensor 15 and detection signals of the sensors provided at each portion of the cutting operation mechanism M.

According to an alternative construction, the relative position setting portion 31, the synchronous rotation control portion 32, the shift operation control portion 33, the amplitude determination portion 34, the control selecting portion 35, the correction control portion 36, and the alert control portion 37 may be structured with hardware, for example, logic. Further alternatively, the relative position setting portion 31, the synchronous rotation control portion 32, the shift operation control portion 33, the amplitude determination portion 34, the control selecting portion 35, the correction control portion 36, and the alert control portion 37 may be structured with combinations of the hardware, for example, logic and the software.

The relative position setting portion 31 sets, or determines relative position of the work 1 and the cutter 10 by moving the work 1 in a direction orthogonal to the work axis T by controlling one of or both of the first slide motor 6Ma and the second slide motor 6Mb. On the basis of the determined relative positions of the work 1 and the cutter 10, the cutting depth of the work 1 by the cutter 10 is corrected (position correction operation).

The synchronous rotation control portion 32 synchronously drives the table motor 2M and the cutter motor 10M with the predetermined ratio of angular velocity so that contact portions of an inner circumference of the work 1 and an outer circumference of the cutter 10 rotate in the equal peripheral velocity. The synchronous rotation control portion 32 corrects the rotation phase of the work 1 and the cutter 10 (phase correction operation).

The shift operation control portion 33 controls the shift motor 5M to move the work 1 integrally with the table 2 in a direction along the work axis T.

The amplitude determination portion 34 includes a function of Fast Fourier Transform (FFT), and analyzes a vibration waveform detected by the vibration sensor 15 to determine the amplitude of the vibration associated with the cutting.

The control selecting portion 35 compares the amplitude value of the vibration determined at the amplitude determination portion 34 and predetermined thresholds (a limit value, a reference value, a set value). The control selecting portion 35 allows the control in response to results of the comparison.

The correction control portion 36 performs a correction control for changing the relative position (relative positional relationship) of the work 1 and the cutter 10 on the basis of the amplitude value of the vibration determined in the amplitude determination portion 34. Further, the correction control portion 36 includes a correction amount computing portion 36A.

The correction amount computing portion 36A calculates a correction amount for the position correction operation and the phase correction operation when it is determined that the amplitude value of the vibration detected by the vibration sensor 15 during the machining, or skiving reaches equal to or greater than the set value (predetermined value) by the amplitude determination portion 34. For the position correction operation, the correction amount for correcting the relative position (relative positional relationship) of the cutter 10 and the work 1 in a direction to reduce the cutting depth is calculated in response to the amplitude value. Further, for the phase correction operation, the correction amount for correcting the relative phase of the cutter 10 and the work 1 in a direction to reduce the excessive cutting is calculated in response to the amplitude value.

The alert control portion 37 performs an abnormality alerting operation and a replacing alert operation on the basis of the amplitude value of the vibration generated during the machining, or skiving that the vibration sensor 15 detects. Then, the alert control portion 37 outputs the information in accordance with the operations to the monitor 16 and the speaker 17.

Vibrations generated during the cutting will be explained as follows. When cutting the work 1 by the cutter 10, the vibration may occur at a terminal end of the cut region, or a portion close to a terminal end of the cut region. It is considered that the vibration is caused by an unbalanced load applied to the blade portion of the cutter 10 when the end portion of the cutter 10 is disengaged from the work 1.

According to the skiving, the work axis T of the work 1 and the cutter axis S of the cutter 10 are arranged on the axes that are skew to each other. Thus, provided that a preceding side (downstream side of rotation) is defined as a leading side, and a following side (upstream side of rotation) is defined as a trailing side, the leading side of the blade portion is disengaged (released) from the work first, and the trailing side is disengaged (released) from the work later at the completion of the cutting.

According to the cutting described above, the vibration is unlikely generated due to stable load applied to the cutter because the load is equally applied to the leading side and the trailing side of a cutting edge in a state where the cutting continues after starting the cutting. However, the vibration may be generated because the loads applied to the leading side and the trailing side are unbalanced at a timing when the leading side of the blade portion is disengaged (released) from the work at a terminal end of the cut region, or at a portion close to a terminal end of the cut region.

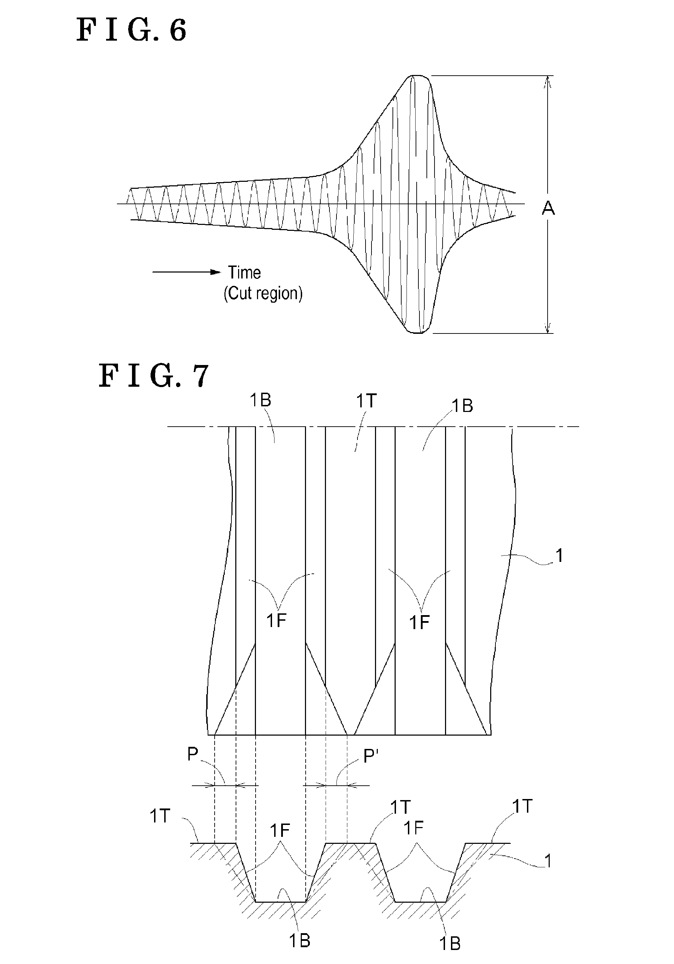

Fig. 6 shows the vibration that occurs during the cutting. As illustrated in Fig. 6, the amplitude of the vibration increases when the cutter 10 reaches a cutting end region (the region of the work 1 where the cutting by the cutter 10 ends; the terminal end of the cut region). In Fig. 6, the maximum amplitude is indicated as a maximum amplitude value A.

By the cutting process, an addendum 1 T, a tooth surface 1 F, and a tooth space 1 B are formed on the work 1. Generally, in a case where the vibration is generated during the cutting process, because the cutter 10 excessively cuts the work 1, the tooth surface 1 F is excessively cut and the width of the tooth space 1 B is increased. Alternatively, the tooth space 1 B is increased by a cutting error value P and/or a cutting error value P'. The cutting error value P usually has different value from the cutting error value P'.

As described above, when the tooth surface 1 F of the gear is excessively cut, the quality of the gear is declined. According to the skiving device of the embodiment, a control operation is executed so as to produce high quality gear by performing the correction operation for the control during the cutting process in response to the vibrations.

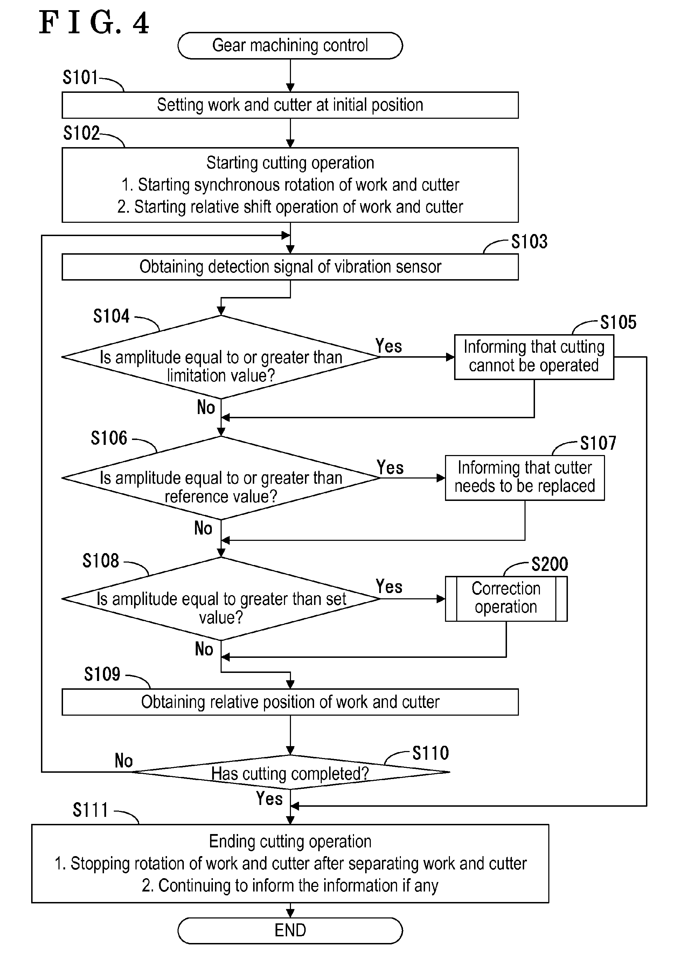

The control operation will be explained in detail hereinafter. As shown in the flowchart in Fig. 4, in a gear machining control (gear skiving control), the control unit D sets the work 1 and the cutter 10 at an initial position, and starts a shift operation of the work 1 relative to the cutter 10 while synchronously rotating the work 1 and the cutter 10 (Step S101, Step S102).

According to the control operation of the embodiment, the relative position setting portion 31 controls the first slide motor 6Ma and the second slide motor 6Ma of the cutting operation mechanism M to integrally operate the slide frame 6 and the shift frame 5 so that the work 1 is set at the initial position relative to the cutter 10. Further, when the work 1 is set at the initial position relative to the cutter 10, the depth of the cutting by the cutter 10 is determined at a predetermined value.

Thereafter, the synchronous rotation control portion 32 synchronously rotates the work 1 and the cutter 10. Then, the shift operation control portion 33 operates the shift frame 5 to shift by the control of the shift motor 5M, and the cutting in the cutting process (machining) starts by operating the work 1 and the cutter 10 in a direction of the tooth trace of the work 1.

In the cutting process, the work 1 rotates in the primary rotation direction Rt and the cutter 10 rotates in the auxiliary rotation direction Rs. By the rotation of the work 1 in the primary rotation direction Rt and the rotation of the cutter 10 in the auxiliary rotation direction Rs synchronous to the rotation of the work 1, the "sliding, or sliding action (sliding speed)" is generated at the contact portions of the work 1 and the cutter 10 because the axes of the work 1 and the cutter 10 are skew. The cutting of the work 1 is performed in response to the shift operation of the cutter 10 in the direction of the tooth trace of the work 1 (i.e., in the direction of the work axis T) using the "sliding, or sliding action."

In the cutting process described above, the detection signal of the vibration sensor 15 is obtained (Step S103). The amplitude determination portion 34 determines the amplitude value based on the detected vibration. Then, the amplitude value, the limitation value, the reference value, and the set value are compared. Based on the comparison results, in a case where the amplitude value is equal to or greater than the limitation value, it is informed, or alerted that the cutting cannot be operated (Step S104, Step S105). Further, in a case where the amplitude value is equal to or greater than the reference value, it is informed, or alerted that the cutter 10 needs to be replaced with the new (Step S106, Step S107). Further, in a case where the amplitude value is equal to or greater than the set value, the correction operation is performed (Step S108, Step S200).

According to the control of the embodiment, the maximum amplitude value detected by the vibration sensor 15 when the cutting by the cutter 10 cannot be performed is set as the limitation value. Thus, in any region in the cutting process, in a case where the control selecting portion 35 determines that the amplitude value determined by the amplitude determination portion 34 on the basis of the detection signal of the vibration sensor 15 is equal to or greater than the limitation value, the alert control portion 37 displays a message indicating that the operation stops due to the generation of the abnormality on the monitor 16 as the abnormality alerting operation, and the alert control portion 37 outputs sounds, or an aural message (verbal message may also be applicable) that makes an operator notice the generation of the abnormality to the speaker 17.

In a case where the amplitude value is equal to or greater than the limitation value, the cutting cannot be performed (cutting is not operable), for example, because of the abnormal state of the cutter 10. In those circumstances, the work 1 and the cutter 10 are disengaged, and then the rotation of the work 1 and the cutter 10 is stopped (a control for stopping the rotation of the work 1 and the cutter 10 is performed after separating the work 1 and the cutter 10)(Step S111).

According to the control of the embodiment, an amplitude value that is greater than an amplitude of the vibration caused when the cutting is performed in a favorable state of the blade portion 10A of the cutter 10 is set as the set value. The set value is predetermined to be smaller than the reference value.

Thus, in any region of the cutting process, in a case where the control selecting portion 35 determines that the amplitude value that the amplitude determination portion 34 determines on the basis of the detection signal of the vibration sensor 15 is equal to or greater than the reference value, the alert control portion 37 operates a replacing period alerting operation to display a message that the cutting capacity of the cutter 10 is declined and the cutter 10 needs to be replaced with the new on the monitor 16, and outputs the sounds, or aural message (verbal message may also be applicable) that urges an operator to replace the cutter 10 to the speaker 17.

Then, in a case where the control selecting portion 35 determines that the amplitude value is equal to or greater than the set value at the cutting end region (the terminal end of the cut region; terminal end region of the cutting process), the transaction proceeds to a correction control executed by the correction control portion 36 (Step S200). The correction control is set as a sub-routine, which will be described hereinafter.

Next, in a case where the cutting (skiving; cutting processing, machining) continues, a relative positional relationship of the work 1 and the cutter 10 in a shift direction is obtained, transactions of Step 103 to Step 109 are repeated until the cutting is completed from the relative position, and the cutting operation is ended when the cutting is completed (Step S109, Step S110, Step S111).

When the cutting operation is ended, the rotation of the work 1 and the cutter 10 is stopped, and the shift operation of the work 1 is stopped. Further, in a case where it is determined that the skiving device is not capable of cutting (cutting is not operable) in Step S105 and the alerting in association with that the cutting cannot be performed is outputted, or in a case where it is determined that the cutter 10 needs to be replaced and the alerting in association with replacing the cutter 10 is outputted, a control for continuously informing the alerted contents is executed.

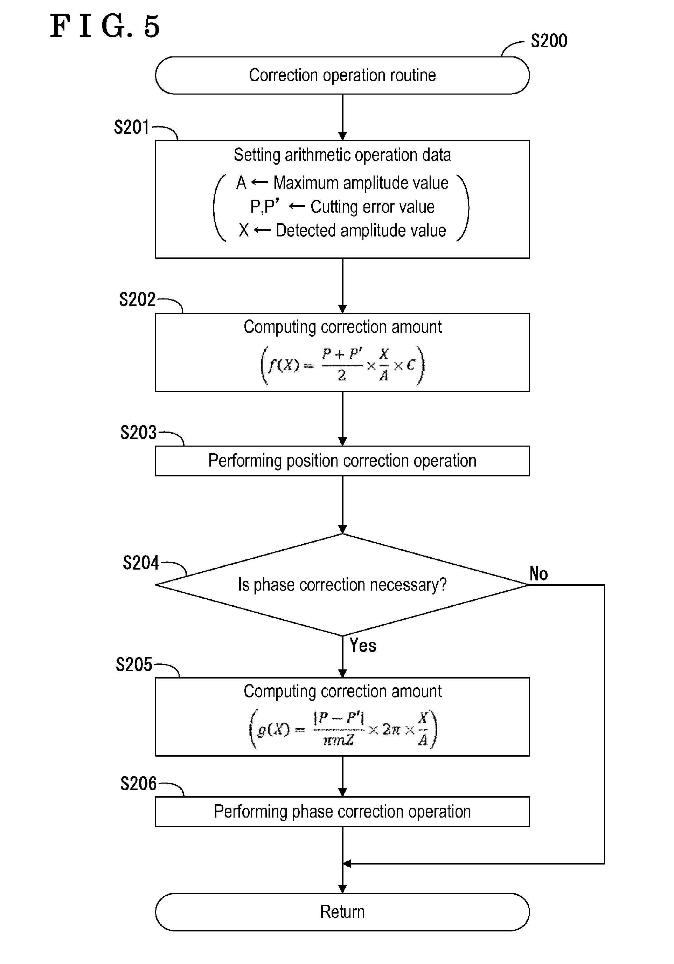

The correction operation will be explained in detail hereinafter. As shown in a flowchart in Fig. 5, in the correction operation, the maximum amplitude value A and the cutting error values P, P' are set as the arithmetic operation data, and an amplitude value X determined by the amplitude determination portion 34 based on the detection signal from the vibration sensor 15 is set, the correction control portion 36 calculates a correction amount f(x), and the correction (position correction, position correction operation) is executed (Step S201, Step S202, Step S203).

The maximum amplitude value A and the cutting error values P, P', which are the same values explained above, are stored in, for example, a nonvolatile memory in the control unit D. The maximum amplitude value A is measured by the vibration sensor 15 during an experimental (pilot) cutting. The cutting error values P, P' are obtained by measuring an error of the tooth space 1 B of the work 1 machined (skived) in the experimental (pilot) cutting process. Further, the amplitude value X is determined by the amplitude determination portion 34 based on the detection signal of the vibration sensor 15.

The correction amount f(x) is calculated on the basis of an arithmetic expression (operation expression) shown in Step S202 in Fig. 5. According to the operation, the average value of the cutting error values P, P' is obtained, and an amplitude ratio is obtained from the amplitude value X and the maximum amplitude value A. Then, the average value of the cutting error values P, P' is multiplied by the amplitude ratio and a constant C. The constant C is set for obtaining an appropriate correction amount.

Thus, because the correction amount is calculated by a feedback control based on the amplitude value X, the correction amount f(x) changes in response to changes in the amplitude value X. In the execution of the correction, the work 1 is moved in a direction to separate the work 1 from the cutter 10 in order to displace the work 1 to reduce the cutting depth by the cutter 10.

Accordingly, a state where the work 1 and the cutter 10 are firmly in contact with each other is cancelled to restrain the vibration from occurring, and, simultaneously, the excessive cutting is reduced. In this operation, at least one of the first slide motor 6Ma and the second slide motor 6Mb is actuated.

Next, in a case where a phase correction is necessary, a correction amount g(x) is calculated on the basis of the set arithmetic operation data and the amplitude value X determined by the amplitude determination portion 34 from the vibration sensor 15 to execute the correction (Step S204, S205, S206).

The control is performed with a premise that there is a difference between the cutting error value P and the cutting error value P', and the relative phase of the cutter 10 and the work 1 is corrected in a direction to reduce the excessive cutting (correction operation, phase correction operation).

According to the control, whether the phase correction is necessary is determined in a case where the absolute value of the difference between the cutting error value P and the cutting error value P' which are pre-obtained is equal to or greater than a predetermined value. Alternatively, in place of the foregoing construction, the vibration sensor 15 may be configured to detect the vibration in a tangential direction at contact portions of the work 1 and the cutter 10, and whether the correction is necessary may be determined on the basis of determination results by determining whether the amplitude in a direction that the phase advances is greater or whether the amplitude in a direction that the phase delays is greater on the basis of the detected result by the vibration sensor 15.

The correction amount g(x) is calculated on the basis of an arithmetic expression (operation expression) shown in Step S205 in Fig. 5. According to the operation, the value obtained by dividing the absolute value of the difference of the cutting error values P, P' by a correction coefficient (e.g., the number of tooth of the work 1) is multiplied by 2π and is further multiplied by the amplitude ratio obtained from the amplitude value X and the maximum amplitude value A.

The correction amount g(x) calculated as described above corresponds to a correction amount in a circumferential direction of the work 1 (phase angle), and a phase correction which changes a phase in the predetermined direction among the direction to advance the phase and the direction to delay the phase is performed.

According to the phase correction, the rotational phase of the work 1 is regulated, or adjusted in a state where the angular velocity of the cutter 10 is maintained. Alternatively, the rotational phase of the cutter 10 may be regulated, or adjusted in a state where the rotation speed of the work 1 is maintained.

According to the correction operation shown in Fig. 5, the position correction operation is performed and the phase correction is performed as necessity arises, however, the construction of the control is not limited. Alternatively, the position correction operation only may be performed, or the phase correction operation only may be performed. Further, alternatively, the phase correction control is performed and the position correction control may be performed as necessity arises.

Advantages and effects of the construction of the embodiment will be explained as follows. According to a method for manufacturing a gear using the gear manufacturing device, because the work 1 and the cutter 10 are synchronously rotated and the cutting is applied to the work 1 using the "sliding, or sliding action" by the relative shift operation of the work 1 and the cutter 10 by the skiving (skiving machining), the cutting is performed effectively.

When the amplitude of the vibration during the cutting (cutting processing, machining) reaches equal to or greater than the set value, the correction operation in which the relative positional relationship of the cutter 10 and the work 1 is corrected in a direction to correct the cutting depth (basically, in a direction to reduce, or to shallow the cutting depth) by the feedback control corresponding to the amplitude value. Accordingly, the amplitude of the vibration is restrained, and the drawback that the tooth surface 1 F of the gear formed on the work 1 is excessively cut is solved, and the width of the tooth space 1 B is set at a necessary value, thus the gear is finished to have high quality.

Further, even in a case where the amplitude of the vibration during the cutting reaches equal to or greater than the set value and the only one of the tooth surfaces of the gear 1 F serving as a pair is to be excessively cut, by correcting the relative phase during the cutting, the cutting is performed without biasing, or the balanced cutting is performed, and thus the gear with high quality can be obtained.

Particularly, according to the position correction operation, the tooth space 1 B of the gear is assumed to be shallower, or reduced, however, because bottomland portion does not work for, or is not involved with the gear engagement, capacity or performance of the gear does not decline.

Further, when the amplitude of the vibration detected by the vibration sensor 15 reaches equal to or greater than the limitation value (e.g., a case where the blade portion 10A of the cutter 10 is damaged), the message urging to stop the operation because of the occurrence of the abnormality is displayed on the monitor 16 as the abnormality alerting operation and the aural message informing the occurrence of the abnormality is outputted to the speaker 17. Consecutive to the abnormality alerting operation, the work 1 is disengaged, or separated from the cutter 10 and the rotation of the cutter 10 and the work 1 is stopped. Thus, the generation of the abnormality is securely recognized by an operator and wasteful machining can be avoided.

In a case where the amplitude value that the amplitude determination portion 34 based on the detection signal of the amplitude sensor 15 reaches equal to or greater than the reference value (e.g., a case where the blade portion 10A of the cutter is worn away and the cutting capacity is declined), the message indicating that the cutting capacity of the cutter 10 is declined and the cutter 10 needs to be replaced is displayed on the monitor 16 and outputs an aural message urging to replace the cutter 10 to the speaker 17 as the replacing period alerting operation. Thus, manufacturing of the gear with high quality is achieved by urging the replacement of the cutter 10 to the operator without declining the operation efficiency.

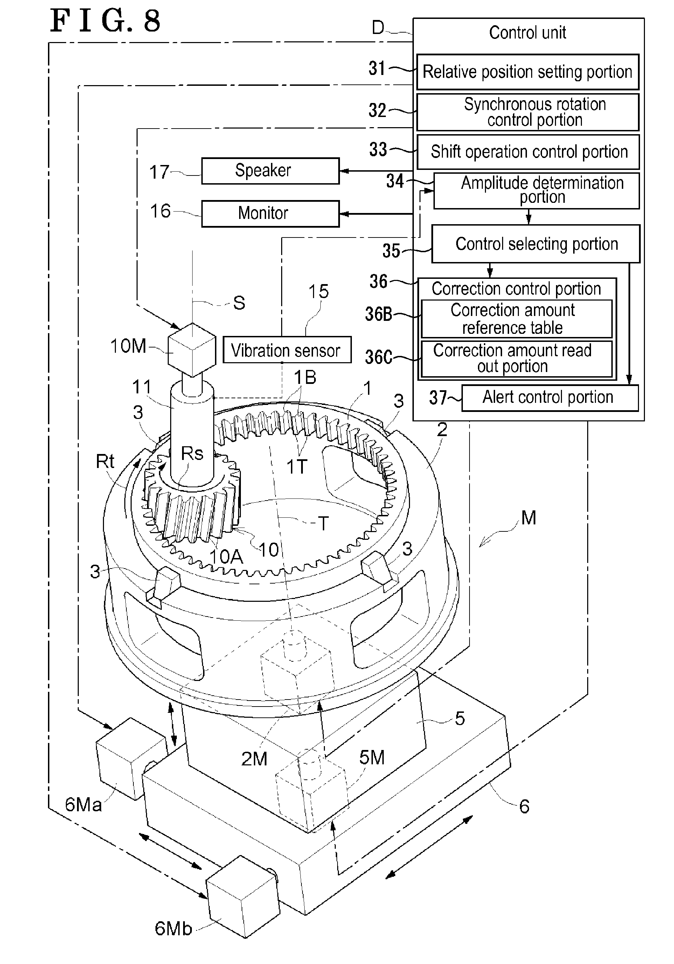

A construction of a gear manufacturing device or a skiving device according to a first modified example may be modified as follows. Instead of the correction amount computing portion 36A of the correction control portion 36 of the embodiment, as illustrated in Fig. 8, the correction control portion 36 may include a correction amount reference table 36B and a correction amount read out portion 36C. According to the construction of the first modified example, the correction amount read out portion 36C reads out the correction amount from the correction amount reference table 36B on the basis of the amplitude value from the vibration sensor 15 to perform the correction operation.

More particularly, the maximum amplitude value A and the cutting error values P, P' are obtained, and plural amplitude ratios are obtained by operation (arithmetic operation) similar to the operation shown in Step S202 in Fig. 5 on the basis of the maximum amplitude value A and plural predicted amplitude values that the vibration sensor 15 possibly detects during the cutting process. Further, on the basis of the amplitude ratios and the cutting error values P, P', the correction amount of the phase correction operation and the correction amount of the position correction operation relative to the amplitude value X detected by the vibration sensor 15 (similar to the correction amount f(x) in Step S202 in Fig. 5) are obtained by an arithmetic operation, are tabulated, and are stored in the correction amount reference table 36B constructed with, for example, a nonvolatile memory.

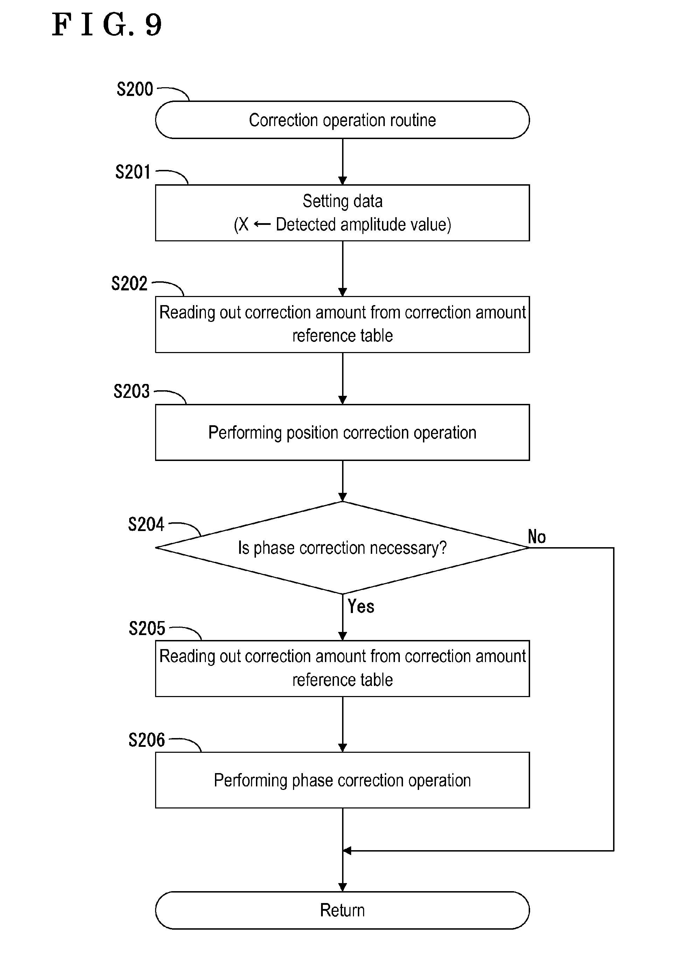

In a case where the amplitude value detected by the vibration sensor 15 reaches equal to or greater than the set value in the cutting process and where the correction operation (Step S200) is executed, a control in accordance with a flowchart shown in Fig. 9 is performed. According to a routine of the correction operation, the amplitude value X determined by the amplitude determination portion 34 based on the detection signal from the vibration sensor 15 is set, the correction amount read out portion 36C reads out the correction amount of the position correction operation from the correction amount reference table 36B, and the position correction operation is performed on the basis of the correction amount (Step S201, Step S202, Step S203).

Thereafter, in a case where the phase correction is necessary, the correction amount read out portion 36C reads out the correction amount of the phase correction operation from the correction amount reference table 36B based on the amplitude value X, and the phase correction operation is performed on the basis of the correction amount (Step S204, Step S205, Step S206).

The control according to the first modified example is included within a range of the feedback control, however, because there is no need to execute the arithmetic operation, swift operation can be performed and a gear with high quality can be attained by an operation with high precision without causing a delay of the control.

According to the correction operation shown in Fig. 9, the position correction operation is executed and the phase correction is executed as necessary arises, however, the construction is not limited. Alternatively, the position correction operation only may be executed. Further, alternatively, the phase correction operation only may be executed. Still further, alternatively, the phase correction control may be executed, and the position correction control may be executed as necessity arises.

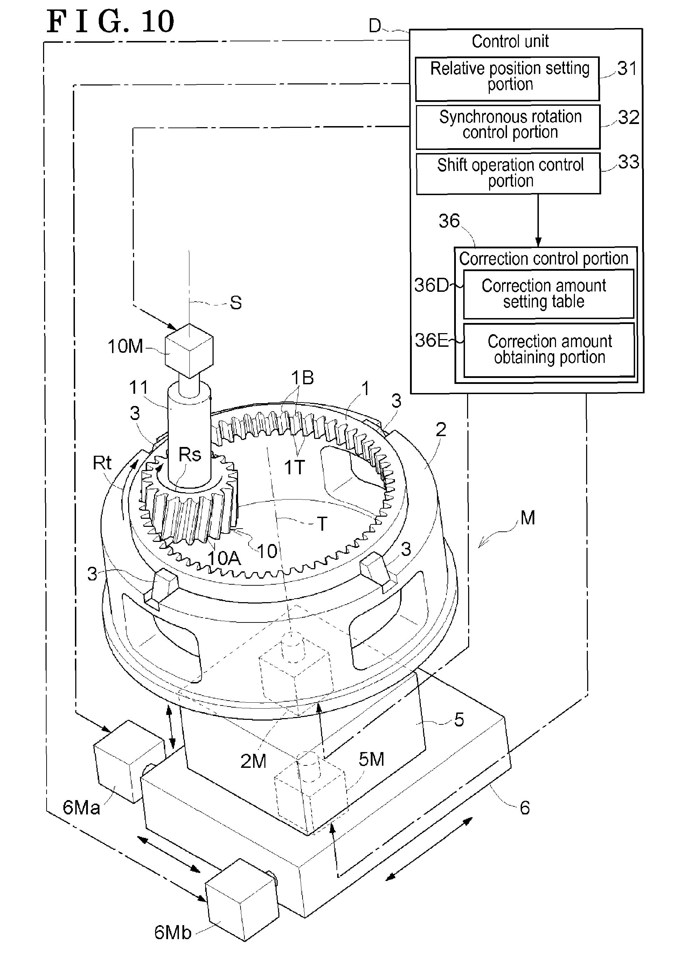

A second modified example is shown in Fig. 10. As illustrated in Fig. 10, the correction operation is operated on the basis of a relative positional relationship between the work 1 and the cutter 10 in the cutting process according to the second modified example.

That is, according to the second modified example, the vibration sensor 15 is not provided, and the correction control portion 36 includes a correction amount setting table 36D and a correction amount obtaining portion 36E. According to this construction, the correction amount obtaining portion 36E reads out the correction amount from the correction amount setting table 36D in association with (in coordination with) the shift operation to performed the correction operation.

More particularly, the correction amount to the shift amount is tabulated, and the correction amount of the position correction operation and the correction amount of the phase correction operation are stored in the correction amount setting table 36D that is constructed with a nonvolatile memory.

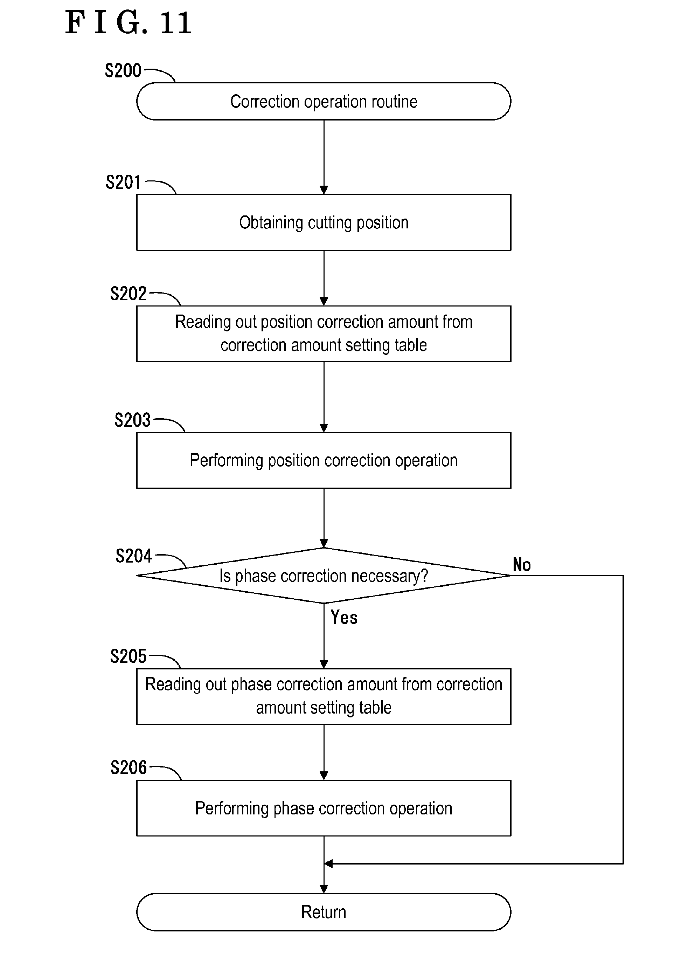

According to the cutting process of the second modified example, as shown in Fig. 11, the cutting position of the cutter 10 relative to the work 1 is obtained from the shift amount of the work 1, the correction amount obtaining portion 36E reads out the correction amount of the position correction operation from the correction amount setting table 36D on the basis of the cutting position, and the position correction operation is performed on the basis of the correction amount of the position correction operation (Step S201, Step S202, Step S203).

In a case where the phase correction is necessary, the cutting position of the cutter 10 relative to the work 1 is obtained from the shift amount of the work 1, the correction amount obtaining portion 36E reads out the correction amount of the phase correction operation from the correction amount setting table 36D on the basis of the cutting position, and the phase correction operation is performed on the basis of the correction amount of the phase correction operation (Step S204, Step S205, Step S206).

The correction amount of the position correction operation and the correction amount of the phase correction operation of the second modified example are pre-obtained values by the arithmetic operation using the vibration sensor 15 described in the embodiment. In place of the amplitude value, the correction amount is read out on the basis of the shift amount according to the second modified example.

According to the transactions of the second modified example, manufacturing costs is reduced because the vibration sensor 15 is not necessary, and further, because the execution of the arithmetic operation is not necessary, swift operation can be performed, and a gear with high quality can be obtained by the operation with high precision without causing a delay of a control.

According to the correction operation shown in Fig. 11, the position correction operation is performed and the phase correction is executed as necessity arises, however, the construction is not limited. Alternatively, the position correction operation only may be executed. Further, alternatively, the phase correction operation only may be executed. Still further, alternatively, the phase correction control may be executed and the position correction control may be executed as necessity arises.

A structure which includes a laser light source and a photodetector may be applied as the vibration sensor. According to this structure, the photodetector receives a reflected light from an object to which the laser is irradiated, and the vibration is detected by the photodetector. Further, alternatively, an acceleration sensor may be applied as the vibration sensor. The vibration sensor 15 may be provided at a member that supports the work 1.

According to the disclosure, a gear manufacturing device includes a control unit (D) for synchronously rotating a work (1) rotatably supported about a work axis (T) and a cutter (10) formed in a gear shape and rotatably supported about a cutter axis (S), the work axis (T) and the cutter axis (S) being skew to each other, the control unit (D) relatively moving the cutter (10) and the work (1) in an axial direction of the work (1) with a predetermined cutting depth. The gear manufacturing device further includes a correction control portion (36) executing at least one of a position correction and a phase correction when the cutter (10) reaches a predetermined terminal end region in a cut region, the position correction for correcting a relative positional relationship of the cutter (10) and the work (1) in a direction to correct the cutting depth, the phase correction for correcting a phase of the cutter (10) and the work (1) in a direction to correct unbalance cutting of a pair of tooth surfaces that structure a tooth portion formed on the work (1).

According to the construction of the disclosure, in a case where the cutter (10) reaches the predetermined terminal end region during the skiving, the correction control portion (36) executes at least one of the correction for correcting the relative positional relationship of the cutter (10) and the work (1) in a direction to reduce the cutting depth and the correction for correcting the phase of the cutter (10) and the work (1) in a direction to correct the unbalance cutting that is otherwise to be applied on the tooth surfaces of the tooth portion serving as a pair, the tooth surfaces formed on the work (1).

As described above, the vibration is likely generated at the terminal end region of the cutting and the terminal end region can be identified in advance (pre-estimated). Thus, when the cutter (10) reaches the terminal end region, the load applied to the cutter (10) is reduced by the correction, thus the vibration can be restrained from occurring and the excessive cutting can be restrained.

Thus, in a case where the cutter (10) reaches the terminal end region of the cut region, by executing at least one of the position correction and the phase correction, the machining precision is enhanced by restraining the vibration when manufacturing the gear by skiving and the gear manufacturing device for manufacturing a gear with high precision can be attained without using the vibration sensor (even if the vibration sensor is not applied).

According to the disclosure, the gear manufacturing device includes the correction control portion (36) which includes a correction amount setting table (36D) in which a correction amount related to a relative position of the cutter (10) and the work (1) at the terminal end region is stored.

Even at the terminal end region, the amplitude value of the vibration is different in accordance with the relative position of the work (1) and the cutter (10), and thus the correction amount related to the amplitude value is different in accordance with the relative position of the work (1) and the cutter (10). Thus, according to the construction of the disclosure, by storing the correction amount to the relative position of the work (1) and the cutter (10) being positioned at the terminal end region in the correction amount setting table (36D), the correction can be performed with an appropriate correction amount setting when performing the cutting at the terminal end region.

A gear manufacturing device includes a control unit (D) for synchronously rotating a work (1) rotating about a work axis (T) and a cutter (10) rotating about a cutter axis (S), the work axis (T) and the cutter axis (S) being skew to each other, the control unit (D) relatively moving the cutter (10) and the work (1) in an axial direction of the work (1) with a predetermined cutting depth, and a correction control portion (36) executing at least one of a position correction and a phase correction when an amplitude value of a vibration detected by a vibration sensor (15) during a machining reaches equal to or greater than a set value, the position correction for correcting a relative positional relationship in a direction to correct the cutting depth, the phase correction for correcting a relative phase in a direction to correct an unbalance cutting that is otherwise to be applied on a pair of tooth surfaces formed on the work (1).

## Claims

1. A gear manufacturing device, comprising:
a control unit (D) for synchronously rotating a work (1) rotatably supported about a work axis (T) and a cutter (10) formed in a gear shape and rotatably supported about a cutter axis (S), the work axis (T) and the cutter axis (S) being skew to each other, the control unit (D) relatively moving the cutter (10) and the work (1) in an axial direction of the work (1) with a predetermined cutting depth;
a vibration sensor (15) detecting a vibration of the work (1) and the cutter (10); and
a correction control portion (36) executing at least one of a position correction and a phase correction when an amplitude value of a vibration detected by the vibration sensor (15) during a machining reaches equal to or greater than a set value, the position correction for correcting a relative positional relationship of the cutter (10) and the work (1) in a direction to correct the cutting depth, the phase correction for correcting a relative phase of the cutter (10) and the work (1) in a direction to correct an unbalance cutting that is otherwise to be applied on a pair of tooth surfaces that structure a tooth portion formed on the work (1).

2. The gear manufacturing device according to claim 1, wherein the correction control portion (36) obtains the amplitude value of the vibration from a detection signal of the vibration sensor (15), and sets a correction amount of the position correction and the phase correction on the basis of an arithmetic operation based on the amplitude value.

3. The gear manufacturing device according to claim 1, wherein the correction control portion (36) includes a correction amount reference table (36B) which stores a correction amount related to the amplitude value detected by the vibration sensor (15) and a correction amount read out portion (36C) reading out the correction amount of said at least one of the position correction and the phase correction from the correction amount reference table (36B) on the basis of the amplitude value from the detection signal of the vibration sensor (15).

4. The gear manufacturing device according to any one of claims 1 to 3 further comprising:
an alert control portion (37) alerting an abnormality in a case where the amplitude value detected by the vibration sensor (15) reaches equal to or greater than a predetermined limitation value.

5. The gear manufacturing device according to any one of claims 1 to 3 further comprising:
an alert control portion (37) performing a replacing alert urging to replace the cutter (10) in a case where the amplitude detected by the vibration sensor (15) reaches equal to or greater than a predetermined reference value.

6. A method for manufacturing a gear, comprising:
synchronously rotating a work (1) rotatably supported about a work axis (T) and a cutter (10) rotatably supported about a cutter axis (S), the work axis (T) and the cutter axis (S) being skew to each other;
skiving the work (1) by relatively moving the cutter (10) and the work (1) in an axial direction of the work (1) with a predetermined cutting depth; and
performing at least one of a position correction and a phase correction when an amplitude value of a vibration detected by a vibration sensor (15) to which the vibration of the work (1) or the cutter (10) is transmitted during the skiving reaches equal to or greater than a set value, the position correction for correcting a relative positional relationship of the cutter (10) and the work (1) in a direction to correct the cutting depth, the phase correction for correcting a relative phase of the cutter (10) and the work (1) in a direction to correct an unbalance cutting that is otherwise to be applied on a pair of tooth surfaces that construct a tooth portion formed on the work (1).

7. The method for manufacturing the gear according to claim 6, further comprising:
storing a maximum amplitude value of the vibration detected by the vibration sensor (15) when the work (1) is processed with the cutting by the cutter (10) and a cutting error value for a maximum cutting amount of each of the pair of tooth surfaces of the tooth portion formed on the work (1) by the skiving when the vibration occurs;
obtaining at least an amplitude ratio on the basis of the amplitude value that the vibration sensor (15) detects and the maximum amplitude value;
obtaining a correction amount by a correction amount computing portion (36A) on the basis of the amplitude ratio and the cutting error value; and
executing at least one of the position correction and the phase correction on the basis of the correction amount.

8. The method for manufacturing the gear according to claim 6, further comprising:
obtaining the maximum amplitude value of a vibration detected by the vibration sensor (15) when the work (1) is processed with the cutting by the cutter (10);
obtaining the cutting error value for a maximum cutting amount of each of the pair of tooth surfaces of the tooth portion formed on the work (1) by skiving when the vibration occurs;
obtaining the plural amplitude ratios on the basis of the maximum amplitude value and a predicted amplitude value that is predicted to be detected by the vibration sensor (15);
storing a correction amount related to the amplitude value detected by the vibration sensor (15) in a correction amount reference table (36B) on the basis of the plural amplitude ratios and the cutting error value;
reading out the correction amount from the correction amount reference table (36B) by a correction amount read out portion (36C) on the basis of the amplitude value detected by the vibration sensor (15); and
executing at least one of the position correction and the phase correction on the basis of the correction amount.

9. The method for manufacturing the gear according to any one of claims 6 to 8, alerting an abnormality when the amplitude value detected by the vibration sensor (15) reaches equal to or greater than a predetermined limitation value.

10. The method for manufacturing the gear according to any one of claims 6 to 9, performing a replacing alert urging to replace the cutter (10) when the amplitude value detected by the vibration sensor (15) reaches equal to or greater than a predetermined reference value.

11. A method for manufacturing a gear, comprising:
synchronously rotating a work (1) rotatably supported about a work axis (T) and a cutter (10) rotatably supported about a cutter axis (S), the work axis (T) and the cutter axis (S) being skew to each other;
skiving the work (1) by relatively moving the cutter (10) and the work (1) in an axial direction of the work (1) with a predetermined cutting depth; and
executing at least one of a position correction and a phase correction when the cutter (10) reaches a predetermined terminal end region in a cut region, the position correction for correcting a relative positional relationship of the cutter (10) and the work (1) in a direction to correct a cutting depth, the phase correction for correcting a phase of the cutter (10) and the work (1) in a direction to correct unbalance cutting of a pair of tooth surfaces that structure a tooth portion formed on the work (1).

12. The method for manufacturing the gear according to claim 11,
storing a correction amount related to a relative position of the work (1) and the cutter (10) being positioned at the terminal end region in a correction amount setting table (36D); and
executing the correction based on the correction amount read out from the correction amount setting table (36D) on the basis of the relative position at the terminal end region.
